# EUROPÄISCHE PATENTSCHRIFT

(11) **EP 0 979 162 B1**
(45) Veröffentlichungstag und Bekanntmachung des Hinweises auf die Patenterteilung: **17.07.2002**
(21) Anmeldenummer: 98919226.5
(22) Anmeldetag: 07.04.1998
(51) Int. Cl.: B29B 15/04, B29C 47/00, B29C 47/50, C08J 3/16

(54) **ZWEISTUFIGES VERFAHREN ZUR ENTWÄSSERUNG VON KUNSTSTOFFDISPERSIONEN**
TWO-STEP METHOD FOR DEHYDRATING PLASTIC DISPERSIONS
PROCEDE A DEUX ETAPES POUR EXTRAIRE L'EAU CONTENUE DANS DES DISPERSIONS DE MATIERES PLASTIQUES

(30) Priorität: 02.05.1997 DE 19718597
(43) Veröffentlichungstag der Anmeldung: 16.02.2000
(73) Patentinhaber: Röhm GmbH & Co. KG, 64293 Darmstadt (DE)
(72) Erfinder: VETTER, Heinz, D-64380 Ro dorf (DE); SCHIKOWSKY, Hartmut, D-64283 Darmstadt (DE); HÖSS, Werner, D-63150 Heusenstamm (DE)
(86) Internationale Anmeldenummer: EP9802005
(87) Internationale Veröffentlichungsnummer: WO9850212

(56) Entgegenhaltungen:
- EP-A- 0 423 759
- EP-A- 0 683 028
- US-A- 4 802 769
- US-A- 4 921 909
- US-A- 5 041 249

## Beschreibung

Die Erfindung betrifft ein verbessertes Verfahren zum Entwässern von wasserhaltigen Kunststoffschmelzen.

### Stand der Technik

EP-A 0 534 235 beschreibt ein Verfahren zur Herstellung schlagzähmodifizierter Thermoplaste. Hierbei wird zunächst ein Kunststoff-Latex unter Zusatz eines Koagulationshilfsstoffs (Calciumformiat-Lösung) bei 90 °C koaguliert. Das Vorkoagulat mit einem Feststoffgehalt von ca. 60 Gew.-% wird anschließend in einem Extruder mechanisch entwässert. Der Vorteil des Verfahrens liegt u. a. in der Entfernung eines Teils des im Kautschuk enthaltenen Wassers. Hierdurch wird ein höherer Durchsatz an Kautschuk bei gleichzeitig verringerter Energieaufnahme erreicht.

EP-A 0 006 503 beschreibt die Herstellung eines Koagulats aus einem Propfpolymerisat eines Polybutylacrylat-Latex durch Fällung mittels Zugabe einer Calciumchlorid-Lösung bei 95 °C.

US-PS 4,602,083 beschreibt ein Verfahren zur Koagulation wasserhaltiger Polymerlatices durch Zugabe von wasserlöslichen, nicht oxidativen Salzen, wie z. B Calciumhypophosphit oder Zinkmethansulfonat.

Bei der Zugabe von Fällungshilfsmitteln besteht generell das Problem, daß es zu einer Beeinträchtigung der Kunststoffqualität kommen kann, da die Hilfsmittel unerwünschte Nebenreaktionen, wie z. B. Gelbfärbung verursachen können.

EP-A 0 683 028 beschreibt ein Verfahren zum Entwässern eines zweiphasigen flüssigen Gemischs aus einer thermoplastischen Kunststoffschmelze und einer Wasserphase in einem gegenläufigen Doppelschneckenextruder. Dabei kann die Koagulation des Kunststoff-Latex direkt im Extruder unter der Scherwirkung in der Koagulationszone bei einer Temperatur im thermoplastischen Bereich des Kunststoffs erfolgen. Alternativ kann auch ein Vorkoagulat eingesetzt werden. Die Schmelze wird dabei in teilgefüllten Schneckengängen gefördert und in wenigstens einem dieser Schneckengänge unter Bildung eines örtlich eng begrenzten, steilen Druckgradienten zu einem zusammenhängenden Schmelzekuchen gestaut. Auf diese Weise fließt das Wasser vor der Grenze des Schmelzekuchens unter Wirkung der Schwerkraft derart nach unten, daß der Schmelzekuchen nicht mit einer zusammenhängenden Wasserphase in Berührung steht. Unter Anwendung dieses Verfahrens kann der Wassergehalt eines Emulsionspolymerisats mit einem Ausgangs-Wasseranteil von 55 Gew.-% beispielsweise auf nur noch 8 Gew.-% Wasser reduziert werden. In einem Entgasungsextruder können anschließend die Restmengen an flüchtigen Anteilen durch eine Vorwärts- und Rückwärts-Entgasungszone weitgehend abgetrennt werden. Das an der Granulierdüse abgenommene Granulat hat schließlich eine Restfeuchte von nur noch 0,06 Gew.-%.

EP-A 0 423 759 beschreibt ein Verfahren zur Herstellung eines partikulären Polymers, in dem ein Polymerlatex mit einem Koagulationshilfsmittel gemischt wird. Anschließend wird die Mischung mit einem organischen Lösungsmittel, in dem das Polymer unlöslich ist, z. B. n-Heptan, versetzt, wodurch in der Polymeraufschlämmung granuläre Polymerpartikel entstehen. Das Verfahren ist dadurch gekennzeichnet, daß zumindest einer der Mischschritte in einem Doppelschneckenextruder mit gleichläufigen Schnecken erfolgen muß.

### Aufgabe und Lösung

EP-A 0 683 028 ermöglicht eine sehr gute Entwässerung von zweiphasigen, flüssigen Gemischen aus einer thermoplastischen Kunststoffschmelze und einer wäßrigen Phase. Vor Übergang in die Entgasungsextruderstufe können z. B. Wassergehalte von nur ca. 8 Gew.-% realisiert werden. Es zeigte sich jedoch, daß es durch die in der Koagulationszone des Extruders zur Koagulation nötigen Temperaturen und dadurch bedingte extrem hohe Oberflächentemperaturen auf der Extruderzylinderaußenwandung von bis zu 350 °C zu extremer Werkstoffbeanspruchung kommen kann. Die Energie muß durch Wärmeleitung über die Zylinderwandung eingetragen werden. Die Wärmestromdichte ist allerdings begrenzt durch endliche Werkstoffestigkeit, die nicht von thermischen Spannungen überschritten werden darf. Die thermischen Spannungen entstehen aufgrund der für den Wärmeübergang notwendigen Temperaturgradienten von der Zylinderaußenwand zur Zylinderinnenwand. Dies ist umso problematischer, wenn der Zylinder zur Vermeidung von Korrosion aus korrosionsfesten Stahl gefertigt sein muß, da hochlegierte korrosionsfeste Werkstoffe in der Regel schlecht wärmeleitend sind. Durch die schlechte Temperaturleitfähigkeit, die begrenzte Werkstofffestigkeit und die endliche Wärmeaustauschfläche
sind der Kaogulierfähigkeit und damit dem Gesamtproduktdurchsatz somit Grenzen gesetzt. Vor allem besteht jedoch das Problem, daß der Anlagenverschleiß im gegenläufigen Doppelschneckenextrudern sehr hoch ist. Dies verursacht eine kurze Lebensdauer des Zylinders sowie der eingebauten Extruderschnecken.

Es wurde daher als Aufgabe gesehen, ein verbessertes Verfahren zur Entwässerung von zweiphasigen, flüssigen Gemischen aus einer thermoplastischen Kunststoffphase und einer wäßrigen Phase dahingehend zu entwickeln, bei dem extreme Materialbelastung des Koagulationsextruders möglichst vermieden wird. Andererseits soll der Gesamtdurchsatz der zu entwässernden Kunststoffschmelze möglichst hoch sein. Die Entwässerungsleistung sollte auch bei gesteigerten Durchsatzmengen mindestens der gemäß dem Verfahren der EP-A 683 028 entsprechen oder diese übertreffen. Das Verfahren soll weiterhin zu möglichst geringen Restpolymeranteilen im Abwasser führen, da diese unerwünscht sind. Gleichzeitig sollten auch Verfahrensschritte vermieden werden, wie der Zusatz von Fällungshilfsmitteln zur Latex-Koagulation.

Die Aufgabe wurde gelöst durch ein Verfahren zum Entwässern eines zweiphasigen, flüssigen Gemischs aus einer thermoplastischen Kunststoffphase und einer Wasserphase durch
a) Koagulation des zweiphasigen flüssigen Gemischs in einem ersten Extruder
b) Entwässerung des Koagulats in einem Doppelschneckenextruder mit gegenläufigen Schnecken mit einer Entwässerungszone
c) Abtrennen flüchtiger Bestandteile durch Entgasung
dadurch gekennzeichnet, daß
in der Stufe a) als erster Extruder ein Einschneckenextruder oder ein Doppelschneckenextruder eingesetzt wird, wobei der Doppelschneckenextruder mit gleichlaufenden Schnecken ausgestattet ist.

Überraschenderweise wurde gefunden, daß die Trennung der Verfahrensschritte a) und b), die in
EP-A 0 683 028 in einem Schritt ausgeführt werden, dann zu einem besonders effektiven Verfahren führen, wenn zunächst in der Stufe a) ein Koagulat in einem Einschneckenextruder oder in einem Doppelschneckenextruder mit gleichläufigen Schnecken erzeugt wird, bevor die eigentliche Entwässerung und Entgasung in den Schritten b) und c) erfolgt. Die Herstellung des Koagulats geht dabei sehr effektiv von statten, da der zur Koagulation notwendige Energieeintrag im wesentlichen durch Dissipation (Scherung) erfolgen kann. Da die Koagulation bereits in Stufe a ) effektiv ist, ist wiederum in Stufe b) eine niedrigere und damit auch leichter handhabbare und somit exaktere Temperatureinstellung möglich. Bevorzugt wird die Koagulation im Extruder in der Verfahrensstufe a) bei einer mindestens 30 °C höherern Schmelzetemperatur, besonders bevorzugt bei hoher Schneckendrehzahl, ausgeführt als die anschließende Entwässerung im Verfahrensschritt b). Dies führt zu einer geringeren Materialbelastung insbesondere im Zylinder des Entwässerungsextruders und ermöglicht gleichzeitig eine bessere Steuerung bzw stabile Betriebsweise des Entwässerungsschritts b). Daher wird über die Stufen a), b) und c) eine insgesamt effektivere Entwässerung des zweiphasigen flüssigen Gemischs aus der thermoplastischen Kunststoffschmelze und der Wasserphase erreicht als in den Verfahren des Standes der Technik. Auf diese Weise können am Ende des Verfahrensschritts b) mindestens 94 % der wäßrigen Phase in flüssiger Form abgetrennt sein.

### Anwendungsgebiet der Erfindung

Das erfindungsgemäße Verfahren eignet sich generell zur Entwässerung von zweiphasigen, flüssigen Gemischen aus der thermoplastischen Kunststoffphase und einer Wasserphase. Dabei kann es sich z. B. um durch Emulsionspolymerisate für Polymethylmethacrylat-Formmassen (s. z. B. EP-A 245 647) oder um Latices, wie z. B. Schlagzähmodifizierungsmittel, handeln. Entsprechende Aufzählungen solcher zweiphasiger, entwässerbarer Gemische sind z. B. in der EP-A 0 534 235 oder in EP-A 0 006 503 zu entnehmen.
Latices enthalten in der Regel 30 bis 50 Gew.-% an dispergierten Kunststoffteilchen, deren mittlere Teilchengröße z. B. 100 bis 500 nm betragen kann. Die Wasserphase macht dementsprechend 70 bis 50 Gew.-% aus; sie enthält im allgemeinen gelöste Emulgatoren oder andere Hilfs- und Fremdstoffe. Die Latexteilchen bestehen aus thermoplastischen Kunststoffen, die im Schmelzezustand auf einem Extruder verarbeitbar sind. Dazu gehören thermoplastische Kunststoffe mit Glasübergangstemperaturen von 20 bis 150°C bzw. einem Temperaturbereich im Schmelzezustand, in welchem sie hinreichend zersetzungsbeständig sind. Die Schmelzetemperatur bei der Verarbeitung im Extruder liegt in der Regel zwischen 50 und 250°C.

Wichtige Klassen von thermoplastischen Kunststoffen sind Copolymerisate auf der Basis von Styrol, Butadien und gegebenenfalls Acrylnitril, sowie Polyvinylchlorid, Polyacrylate bzw. Polymethacrylate. Eine weitere wichtige Klasse sind Latices von mehrphasigen thermoplastischen Kunststoffen, enthaltend Latexteilchen mit einer thermoplastischen Hartphase und einer vernetzten Zähphase. Sie können gegebenenfalls während des Verfahrens mit einem weiteren thermoplastischen Kunststoff, der in fester oder geschmolzener Form z. B. im Verfahrensschritt c) eingebracht wird und mit dem Kunststoff der Hartphase des Latex übereinstimmt oder mit diesem verträglich ist, vermischt werden. Vorzugsweise besteht der Kunststoff der Hartphase überwiegend aus Polymethylmethacrylat und der Kunststoff der Zähphase überwiegend aus vemetztem Polybutylacrylat, das zum Zwecke der Angleichung des optischen Brechungsindexes an den des Polymethylmethacrylats auch mit Styrol oder Benzylacrylat copolymerisiert sein kann.

Typische Mischungen dieser Art enthalten z.B. 4 bis 50 Gew.-% des mehrphasigen Latex-Kunststoffes, worin der Polybutylacrylat-Anteil 2 bis 80 Gew.-% und der Polymethylmethacrylat-Anteil 20 bis 98 Gew.-% ausmachen kann, sowie 2 bis 60 Gew.-% des thermoplastischen Polymethylmethacrylat-Kunststoffes. Wenn dieser nicht in geschmolzener Form eingebracht wird, ist es auch möglich, den Latex des mehrphasigen Kunststoffes mit einem Polymethylmethacrylat-Latex zu vermischen und die Latexmischung nach dem Verfahren der Erfindung zu verarbeiten.

### Ausführung der Erfindung

Der bei dem erfindungsgemäßen Verfahren in der Stufe a) verwendete Extruder enthält entweder nur eine Schnecke (Einschneckenextruder) oder zwei parallel angeordnete Schnecken , die beide im gleichen Uhrzeigersinn betrieben werden (gleichläufiger Doppelschneckenextruder). Ein für die Stufe a) typischer Einschneckenextruder kann z. B. durch folgende Kenndaten charakterisiert werden: Schneckendurchmesser D = 34 mm,
Länge = 30 D.

Für Produktionszwecke kann der Extruder z. B. einen Schneckendurchmesser D von 50 mm bis 250 mm und eine Schneckenlänge vom 20 bis 40 -fachen des Schneckendurchmessers haben (20 - 40 D).

Bevorzugt erzeugen die zum Einsatz kommenden Extruderschnecken zur Energiedissipation aus der Schneckenrotation in das wässrige, mehrphasige System hohe Schergefälle. Diese können durch Fördern oder Zirkulation eines Produktes durch enge Spalte erreicht werden.
Es ist weiterhin vorteilhaft, die Extruderschnecken über die Hälfte der gesamten Verfahrenslänge mit Knet- und Scherteilen auszustatten. Die Knetteile können entweder als Knetblock oder als hintereinander angeordnete Einzelknetscheiben ausgeführt sein. Auch links- und rechtsgängig versetzte Anordnungen der Scheiben können zur Erhöhung der Wirkung von Vorteil sein.

Der Extruder kann z. B. in einem Temperaturbereich von 150 bis 300 °C, bevorzugt oberhalb von 200 °C, insbesondere bei 240 - 260 °C, betrieben werden. Dabei sind Schneckendrehzahlen bis 800 Umdrehungen pro Minute (Ulmin) möglich, ohne daß nennenswerter Verschleiß auftritt, bevorzugt sind 200- 300 U/min. Eine bevorzugte Kombination sind mindestens 240 °C bei mindestens 200 U/min.

Anschließend wird das Koagulat in einen Entwässerungsextruder überführt, wo der Verfahrensschritt b) ausgeführt wird. Extruder mit entsprechenden Entwässerungszonen sind z. B. aus US-PS 4,110,843, US-PS 4,148,991 oder US 5,232,649 bekannt. Bevorzugt wird jedoch ein Extruder mit gegenläufig rotierenden Schnecken gemäß der EP-A 0 683 028 eingesetzt, bei dem die Schmelze in teilgefüllten Schneckengängen gefördert und in wenigstens einem dieser Schneckengänge unter Bildung eines örtlich eng begrenzten, steilen Druckgradienten zu einem zusammenhängenden Schmelzekuchen gestaut wird. Auf diese Weise wird eine Phasenseparation der flüssigen Phase von der durchgängigen Schmelzephase (Schmelzekuchen) erreicht. Unter der Wirkung der Schwerkraft fließt das Wasser nach unten ab und kann über geeignete Öffnungen im Extruderzylinder entfernt werden.

Zur Entwässerung in der Verfahrensstufe b) kann der Extruder z. B. in einem Temperaturbereich um 230 °C, bevorzugt höchstens 210 °C, insbesondere nicht mehr als 200 °C, bei einer Schneckendrehzahl von z. B. 80 U/min und einem Druck im Bereich von ca. 40 bar betrieben werden.

Nach dem Abzug der Wasserphase enthält die Kunststoffschmelze meistens noch 5 bis 20 Gew.-% Wasser in gelöster oder flüssig eingeschlossener Form. Die Abtrennung von wasserlöslichen Nebenbestandteilen, wie Emulgatoren oder Elektrolyten aus der Schmelze läßt sich vervollständigen, wenn der entwässerten Schmelze in einer zusätzlichen Mischzone reines Wasser oder ein anderes flüchtiges Lösemittel, das die Verunreinigungen, jedoch nicht den Kunststoff löst, zugesetzt und in einer weiteren Entwässerungszone in gleicher Weise wie zuvor abgetrennt wird. Erfindungsgemäß können am Ende des Verfahrensschritts b) mindestens 94 % der wäßrigen Phase in flüssiger Form abgetrennt sein.

Das restliche Wasser und weitere flüchtige Bestandteile werden weitestgehend im Verfahrensschritt c) durch Entgasung abgetrennt. Dies kann in einer anschließenden Entgasungszone des Entwässerungsextruder oder auch im einem separaten Entgasungsextruder geschehen. Die Entgasung erfolgt üblichweise bei Normaldruck und/oder einem Druck von 0,01 bis 0,99 bar oder auch gegebenenfalls in mehreren Stufen mit zunehmenden Vakuum. Es wird ein Wassergehalt unter 0,1 Gew.-%, vorzugsweise von 0,03 bis 0,06 Gew.-% angestrebt. Nach der Entgasung kann die Schmelze in einer abschließenden Pumpzone auf einen zur Extrusion geeigneten Schmelzedruck gebracht und extrudiert werden.

Während der Phasentrennung kann die erforderliche Höhe und Gleichmäßigkeit des Druckes sicher aufrechterhalten werden, wenn die Entwässerungszone von der Entgasungszone apparativ getrennt wird. Die Funktionen der Phasentrennung und der Entgasung werden in diesem Falle auf zwei Extruder verteilt, wobei nur für die erste Funktion ein kämmender Doppelschneckenextruder erforderlich ist. Der Druck am Ende der Entwässerungszone, der eine Pumpzone nachgeschaltet werden kann, läßt sich mittels eines Drosselventils für die ausgetragene Schmelze genau einstellen.

Die Schmelze kann über eine Leitung in einen herkömmlichen Entgasungsextruder überführt werden. Dort können gewünschtenfalls nach der Entgasungszone in einer oder mehreren Mischzonen nochmals eine Kunststoffschmelze sowie gegebenenfalls andere Additive, wie Gleitmittel, Stabilisatoren, Antistatika, Färbemittel, UV-Absorber u.dergl. zugeführt werden. Anschließend können in einer weiteren Entgasungszone unter Vakuum letzte flüchtige Anteile aus der Schmelze entfernt werden.

Am Ende des Entgasungsextruders wird die Schmelze mittels einer Pumpzone in Form einer Schmelze ausgetragen. Dies kann mit Hilfe einer Granulierdüse geschehen, aus der eine Vielzahl dünner Stränge extrudiert, unter die Erweichungstemperatur gekühlt und zu einem handelsüblichen Formmassen-Granulat geschnitten wird. Man kann jedoch auch unmittelbar mit einer geeigneten Extrusionsdüse in an sich bekannter Weise ein geformtes Kunststoffprofil, z.B. eine Folie, extrudieren.

### Vorteilhafte Wirkungen der Erfindung

Das erfindungsgemäße Verfahren bietet eine Reihe von Vorteilen. So ermöglicht es die effektive Koagulation in der Stufe a) ohne jegliche Koagulationshilfsstoffe auszukommen, was in der Regel immer erwünscht ist.

Die aggregatmäßige Trennung des Koagulations - und des Entwässerungsschrittes führt zu einem geringeren Verschleiß der Aggregate an sich. Wartungs- und Stillstandzeiten werden dadurch verringert. Der Austrag von Polymer mit der abgetrennten wäßrigen Phase (Restpolymergehalt im Abwasser) ist auch bei hohen Durchsatzraten überraschenderweise erheblich geringer.

Durch die insgesamt bessere Entwässerung mittels des kombinierten Verfahrens werden gleichzeitig deutlich geringere Rest-Emulgatorgehalte im Polymerprodukt erhalten. Dies ist von Vorteil, da Emulgatorreste zu einer Feuchtigkeitsaufnahme führen, die ursächlich für eine unerwünschte milchig-weiße Trübung ("Whitening") ist . Durch den insgesamt niedrigeren Rest-Emulgatorgehalt erfährt das Endprodukt somit eine qualitative Verbesserung.

### BEISPIELE

### Beispiel 1 (Vergleichsbeispiel):

Es wird ein dreistufig aufgebautes Emulsionspolymerisat mit folgender Zusammensetzung verarbeitet:
Stufe I:
   Methylmethacrylat / Ethylacrylat / Allylmethacrylat
   (Anteile : 95,7/4/0,3)
Stufe II:
   Butylacrylat/Styrol/Allylmethacrylat (82/17/1)
Stufe III Methylmethacrylat / Ethylacrylat (96/4)
   Massenverhältnis Stufe I : II : III = 20/45/35
   Massenverhältnis Polymerphase/ Wasserphase = 45/55

Der Latex wird mit einer Membran- Dosierpumpe mit einem Massenstrom von 10 kg/h in den Extruderzylinder eines dicht kämmenden, gegenläufigen Doppelschneckenextruder gepumpt. Die Schneckendurchmesser betragen 34 mm. Die Schnecken sind dreigängig mit einer Steigung von 30mm.
Die Koagulationszone, in der die Latexteilchen in einen Schmelzekuchen überführt werden, hat eine Länge von 6 D und wird auf eine Temperatur von 230°C gehalten. Die Entwässerungszone und die Austragszone haben insgesamt eine Länge von 20 D und werden mit einer Temperatur von 210°C betrieben. Die Schneckendrehzahl wird auf 80 U/min eingestellt.

Im Bereich der Entwässerungszone ist der Zylinder mit 2mm breiten und 60mm langen Schlitzen geöffnet, unter denen ein Sammelbehälter zum Auffangen der abfließenden wässrigen Phase druckdicht angebracht ist. Durch die Überlagerung des Sammelbehälters mit Stickstoff wird ein Druck von 40 bar im Behälter eingestellt. Über ein Ventil wird aus dem Sammelbehälter eine Wassermenge von 5,27 kglh abgezogen. Das erhaltene Abpreßwasser enthält 0,5 Gew.-% organische Substanz (Restpolymer). Die von der wässrige Phase weitgehend befreite Schmelze enthält noch 8 Gew.- % Wasser, das mittels eines nachgeschalteten Entgasungsextruders bis auf einen Restfeuchtegehalt von 0,06 Gew.- % durch Vakuumentgasung entfernt wird. Das erhaltene Produkt wurde als Stränge abgezogen und in einer Granuliereinrichtung zu Gleichkorngranulat geschnitten.

### Beispiel 2 (erfindungsgemäß):

Die Anlage zur Entwässerung von Latex besteht erfindungsgemäß aus drei Teilen: einem konventionellen dichtkämmenden gleichlaufenden Doppelschneckenextruder zur Koagulation des Polymerlatex, einem Entwässerungsextruder zur Abtrennung der wässrigen Phase von der Schmelzephase sowie einem nachgeschaltetem Entgasungsextruder. Der Koagulationsextruder besitzt einen Schneckendurchmesser von 34 mm und einer Verfahrenslänge von 30 D. Die zweigängigen Extruderschnecken verfügen über eine Länge von 14 D über Knetblöcke, wie z.B. 16 Stück KB 5-2-30R4 zur Energie-Dissipation.
Als Entwässerungsextruder wird der in Beispiel 1 beschriebene gegenläufige Doppelschneckenextruder eingesetzt. Der verwendete Entgasungsextruder ist identisch mit dem in Beispiel 1 genutzten Aggregat.

Über eine Dosierpumpe werden 10 kg/h des in Beispiel 1 beschriebenen Latex in den Koagulationsextruder gepumpt. Nach Koagulation des Latex bei einer Schneckendrehzahl von 250 Ulmin und einer Zylindertemperatur von 250°C konnte nach Abtrennung der wässrigen Phase im Abpreßwasser ein Restpolymergehalt von 0,35 Gew.-% gefunden werden. Der Entwässerungsextruder wurde bei einer Zylindertemperatur von 190°C gefahren.

Der Restwassergehalt nach der Entwässerungsstufe betrug 6 Gew.- %. Das nach dem Abziehen und Abkühlen der Schmelzestränge geschnittene Granulat war brilliant und farblos.

### Beispiel 3 (Vergleichsbeispiel)

Gemäß dem in Beispiel 1 beschriebenen Verfahren wird eine erhöhte Latexmenge von 15 kglh zugeführt. Die eingestellte Schneckendrehzahl wird dazu auf 100 Ulmin erhöht. Die Temperaturen am Abpreßextruder wurden zur Erreichung einer besseren Koagulation auf 250°C erhöht. Im Bereich der Entwässerungszone wurde eine Temperatur von 200°C eingestellt.

Nach einer Betriebsdauer von 12 min wurde ein Verstopfen der Abflußleitung des Wassersammelbehälters festgestellt. Der Versuch mußte abgebrochen werden, da zu niedrigviskose Schmelze in den Sammelbehälter geflossen war.

### Beispiel 4 (Vergleichsbeispiel)

Gemäß dem in Beispiel 1 beschriebenen Verfahren wird eine erhöhte Latexmenge von 20 kglh zugeführt. Die eingestellte Schneckendrehzahl wird dazu auf 120 U/min erhöht. Der erhaltene Restpolymergehalt im Abpreßwasser wurde mit 2 Gew.-% bestimmt. Die nach der Entwässerung verbliebene und zu entgasende Wassermenge betrug 11 Gew.- %. Das als Stränge abgezogene, dann abgekühlte und in einer Granuliereinrichtung zu Gleichkorngranulat geschnittene Produkt ist graustichig aufgrund von Metallabrieb aus dem dichtkämmenden gegenläufigen Doppelschneckenextruder

### Beispiel 5 (erfindungsgemäß)

Auf der nach dem erfindungsgemäßen Verfahren arbeitenden Abpreßanlage wurde der Durchsatz von 10 kg/h auf 15 kg/h erhöht. Die Drehzahl des Koagulationsextruder betrug 250 U/min, die Drehzahl des Entwässerungsextruders 80 U/min. Der erhaltene Restpolymergehalt im Abpreßwasser wurde mit 0,35 Gew.-% bestimmt. Die nach der Entwässerung verbliebene und zu entgasende Wassermenge betrug 6 Gew.- %. Das als Stränge abgezogene, dann abgekühlte und in einer Granuliereinrichtung zu Gleichkorngranulat geschnittene Produkt ist brilliant und farblos und zeigt keinen Graustich wie in Beispiel 4.

### Beispiel 6 (erfindungsgemäß)

Auf der nach dem erfindungsgemäßen Verfahren arbeitenden Abpreßanlage wurde der Durchsatz von 10 kg/h auf 20 kg/h erhöht. Die Drehzahl des Koagulationsextruder betrug 250 U/min, die Drehzahl des Entwässerungsextruders 60 U/min. und einer Zylindertemperatur von 250°C konnte nach Abtrennung der wässrigen Phase im Abpreßwasser ein Restpolymergehalt von 0,35 Gew.-% gefunden werden. Der Entwässerungsextruder wurde bei einer Zylindertemperatur von 190°C gefahren.

Die nach der Entwässerung verbliebene und zu entgasende Wassermenge betrug 6 Gew.- %. Das als Stränge abgezogene, dann abgekühlte und in einer Granuliereinrichtung zu Gleichkorngranulat geschnittene Produkt ist brilliant und farblos und zeigt keinen Graustich wie in Beispiel 4.

## Patentansprüche

1. Verfahren zum Entwässern eines zweiphasigen flüssigen Gemischs aus einer thermoplastischen Kunststoffphase und einer Wasserphase durch
a) Koagulation des zweiphasigen flüssigen Gemischs in einem ersten Extruder
b) Entwässerung des Koagulats in einem Doppelschneckenextruder mit gegenläufigen Schnecken mit einer Entwässerungszone
c) Abtrennen flüchtiger Bestandteile durch Entgasung
**dadurch gekennzeichnet, daß**
in der Stufe a) als erster Extruder ein Einschneckenextruder oder ein Doppelschneckenextruder eingesetzt wird, wobei der Doppelschneckenextruder mit gleichlaufenden Schnecken ausgestattet ist.

2. Verfahren nach Anspruch 1, **dadurch gekennzeichnet, daß** der Verfahrensschritt a) bei einer mindestens um 30°C höheren Schmelzetemperatur durchgeführt wird als der Verfahrensschritt b).

## Claims

1. Process for dewatering a two-phase liquid mixture of a thermoplastic plastic phase and an aqueous phase by
a) coagulating the two-phase liquid mixture in a first extruder
b) dewatering the coagulum in a double screw extruder with contra-rotating screws with a dewatering zone
c) separating off volatile constituents by degassing,
**characterised in that**
in step a) a single-screw extruder or a double-screw extruder is used as the first extruder, the double-screw extruder being fitted with screws rotating in the same direction.

2. Process according to claim 1, **characterised in that** step a) is carried out at a melt temperature which is at least 30°C higher than step b).

## Revendications

1. Procédé de déshydratation d'un mélange liquide à deux phases constitué d'une phase de matière synthétique thermoplastique et d'une phase aqueuse, par
a) coagulation du mélange liquide à deux phases dans une première extrudeuse,
b) déshydratation du produit de coagulation dans une extrudeuse à deux vis avec vis à contre-courant avec une zone de déshydratation
c) séparation des constituants volatils par dégazage,
**caractérisé en ce que**
dans l'étape a) on utilise comme première extrudeuse une extrudeuse à une vis ou une extrudeuse à deux vis, l'extrudeuse à deux vis étant équipée de vis de même sens.

2. Procédé selon la revendication 1,
**caractérisé en ce qu'**
on réalise l'étape a) du procédé à une température de fusion plus élevée d'au moins 30°C que dans l'étape b) du procédé.
